# EUROPEAN PATENT APPLICATION

(11) **EP 4 657 587 A1**
(43) Date of publication of application: **03.12.2025**
(21) Application number: 25179512.6
(22) Date of filing: 28.05.2025
(51) Int. Cl.: H01M 10/0525, H01M 10/0567

(54) **ELECTROLYTE SOLUTION FOR RECHARGEABLE LITHIUM BATTERY AND RECHARGEABLE LITHIUM BATTERY INCLUDING THE SAME**

(30) Priority: 31.05.2024 KR 20240071399
(71) Applicant: SAMSUNG SDI CO., LTD., Yongin-si, Gyeonggi-do 17084 (KR); Korea Advanced Institute of Science and Technology, Daejeon (KR)
(72) Inventor: Choi, Nam-Soon, 34141 Yuseong-gu, Daejeon (KR); Kim, Myunghoon, 17084 Yongin-si, Gyeonggi-do (KR); Kim, Aeran, 17084 Yongin-si, Gyeonggi-do (KR); Han, Seunghee, Yuseong-gu, Daejeon (KR); Yu, Arum, 17084 Yongin-si, Gyeonggi-do (KR); Kim, Sanghoon, 17084 Yongin-si, Gyeonggi-do (KR); Kim, Junyoung, Yuseong-gu, Daejeon (KR); Lee, Gihoon, Yuseong-gu, Daejeon (KR); Park, Sewon, Yuseong-gu, Daejeon (KR)
(74) Representative: Gulde & Partner

(57) **Abstract**

Provided is an electrolyte solution for a rechargeable lithium battery and a rechargeable lithium battery including the same, and the electrolyte solution includes a non-aqueous organic solvent, a lithium salt, and an additive represented by Formula 1 previously described.

## Description

### BACKGROUND

The present disclosure herein relates to an electrolyte solution for a rechargeable lithium battery, and a rechargeable lithium battery including the same.

Recently, with the rapid spread of battery-using electronic devices, such as mobile phones, laptop computers, and electric vehicles, demand for a rechargeable battery with high energy density and high capacity has been rapidly increased. Accordingly, research and development has been actively conducted to improve performance of the rechargeable lithium battery.

The rechargeable lithium battery includes a positive electrode and a negative electrode containing an active material capable of intercalation and deintercalation of lithium ions, and an electrolyte solution. Electrical energy is produced by oxidation and reduction reactions when the lithium ions are intercalated and deintercalated into/from the positive electrode and the negative electrode.

A solution in which a lithium salt is dissolved in a non-aqueous organic solvent is used as an electrolyte for this rechargeable lithium battery. The rechargeable lithium battery has battery characteristics through complex reactions between the positive electrode and the electrolyte, the negative electrode and the electrolyte, and the like. Therefore, the use of an appropriate electrolyte is one of the important variables that improve performance of the rechargeable lithium battery.

### SUMMARY

The invention is defined by the appended claims. The description that follows is subjected to this limitation. Any disclosure lying outside the scope of said claims is only intended for illustrative as well as comparative purposes.

The present disclosure provides an electrolyte solution for a rechargeable lithium battery having improved high-temperature lifespan characteristics and stability.

The present disclosure also provides a rechargeable lithium battery including the electrolyte solution.

An embodiment of the present invention provides an electrolyte solution for a rechargeable lithium battery including a non-aqueous organic solvent, a lithium salt, and an additive represented by Formula 1 below.

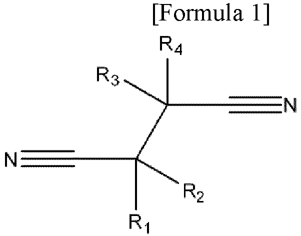

In Formula 1 above,
R₁ to R₄ is each independently selected from the group consisting of a halogen atom, a C1 to C20 alkyl group, a C1 to C20 halogenated alkyl group, a C3 to C30 cycloalkyl group, a C6 to C30 aryl group, a hydroxy group, a C1 to C10 alkoxy group, a carboxylic acid group, an aldehyde group, an epoxy group, a cyano group, a nitro group, an amino group, and a sulfonic acid group.

In an embodiment of the present invention, a rechargeable lithium battery includes a positive electrode containing a positive electrode active material, a negative electrode containing a negative electrode active material, and an electrolyte solution, and the electrolyte solution includes a non-aqueous organic solvent, a lithium salt, and the additive represented by Formula 1 previously described.

### BRIEF DESCRIPTION OF THE FIGURES

The accompanying drawings are included to provide a further understanding of the present invention, and are incorporated in and constitute a part of this specification. The drawings illustrate embodiments of the present invention and, together with the description, serve to explain principles of the present invention. In the drawings:
FIG. 1 is a simplified conceptual diagram illustrating a rechargeable lithium battery according to embodiments of the present invention; and
FIGS. 2 to 5 are cross-sectional views schematically illustrating a rechargeable lithium battery according to an embodiment.

### DETAILED DESCRIPTION

In order to fully understand the configuration and effect of the present invention, embodiments of the present invention will be described below in more detail with reference to the accompanying drawings. The present invention may, however, be embodied in various forms and should not be construed as limited to the embodiments set forth herein, and various changes and modifications can be made. Rather, these embodiments are provided so that this disclosure will be thorough and complete, and will fully convey the scope of the present invention to those skilled in the art to which the present disclosure pertains.

In this specification, it will be understood that, when an element is referred to as being on another element, the element may be directly on the other element or intervening elements may be present therebetween. In the drawings, thicknesses of components are exaggerated for effectively explaining the technical contents. Like reference numerals or symbols refer to like elements throughout the specification.

The singular forms are intended to include the plural forms as well, unless the context clearly indicates otherwise. The terms "comprises/includes" and/or "comprising/including" used in this description do not exclude the presence or addition of one or more other components.

In this specification, "combination thereof" may refer to a mixture, a stack, a composite, a copolymer, an alloy, a blend, and a reaction product of components.

In this specification, unless otherwise defined, "substitution" means that at least one hydrogen of a substituent or a compound is substituted with deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In particular, "substitution" may mean that at least one hydrogen of a substituent or a compound is substituted with deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substitution" may mean that at least one hydrogen of a substituent or a compound is substituted with deuterium, a halogen group, a C1 to C20 alkyl group, a C6 to C30 aryl group, a C1 to C10 fluoroalkyl group, or a cyano group. Alternatively, "substitution" may mean that at least one hydrogen of a substituent or a compound is substituted with deuterium, a halogen group, a C1 to C5 alkyl group, a C6 to C18 aryl group, a C1 to C5 fluoroalkyl group, or a cyano group. For example, "substitution" may mean that at least one hydrogen of a substituent or a compound is substituted with deuterium, a cyano group, a halogen group, a methyl group, an ethyl group, a propyl group, a butyl group, a phenyl group, a biphenyl group, a terphenyl group, a trifluoromethyl group, or a naphthyl group.

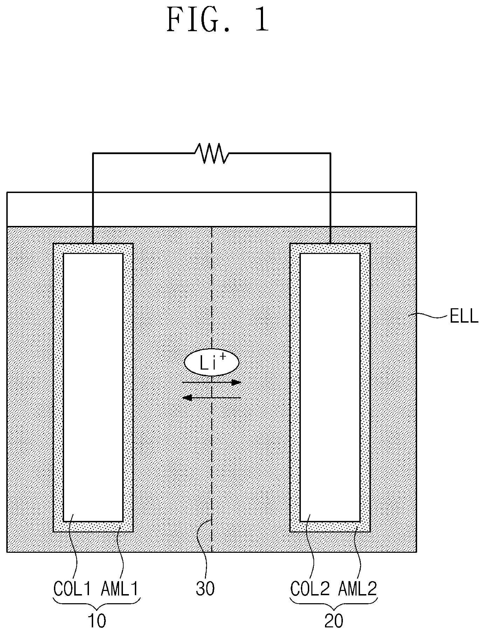

FIG. 1 is a cross-sectional view of a rechargeable lithium battery according to embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that can serve as a sacrificial positive electrode.

An amount of the positive electrode active material may be 90 wt% to 99.5 wt% based on 100 wt% of the positive electrode active material layer AML1. Amounts of the binder and the conductive material may be 0.5 wt% to 5 wt%, respectively, based on 100 wt% of the positive electrode active material layer AML1.

The binder serves to attach the positive electrode active material particles well to each other and also to attach the positive electrode active material well to the current collector COL1. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity(e.g., electrical conductivity) to the electrode. Any material that does not cause chemical change(e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector COL1, but is not limited thereto.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include 90 wt% to 99 wt% of the negative electrode active material, 0.5 wt% to 5 wt% of the binder, and 0 wt% to 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity(e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector COL2 may include a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 ≤ x ≤ 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

### Rechargeable Lithium Battery

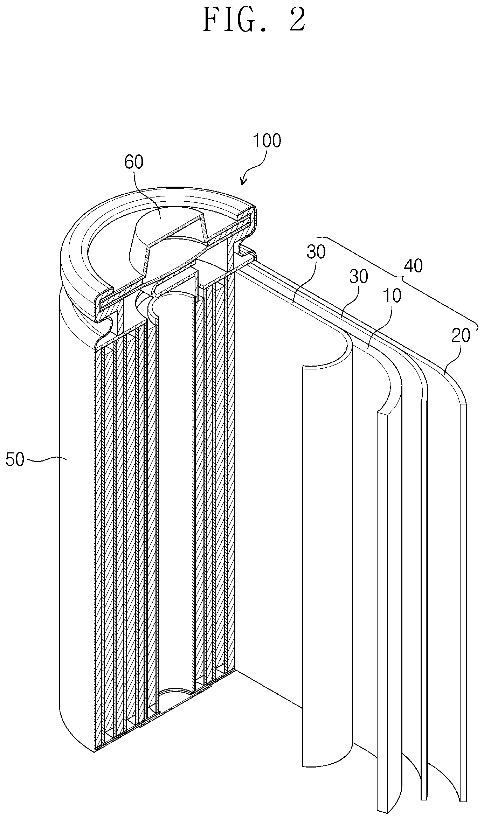

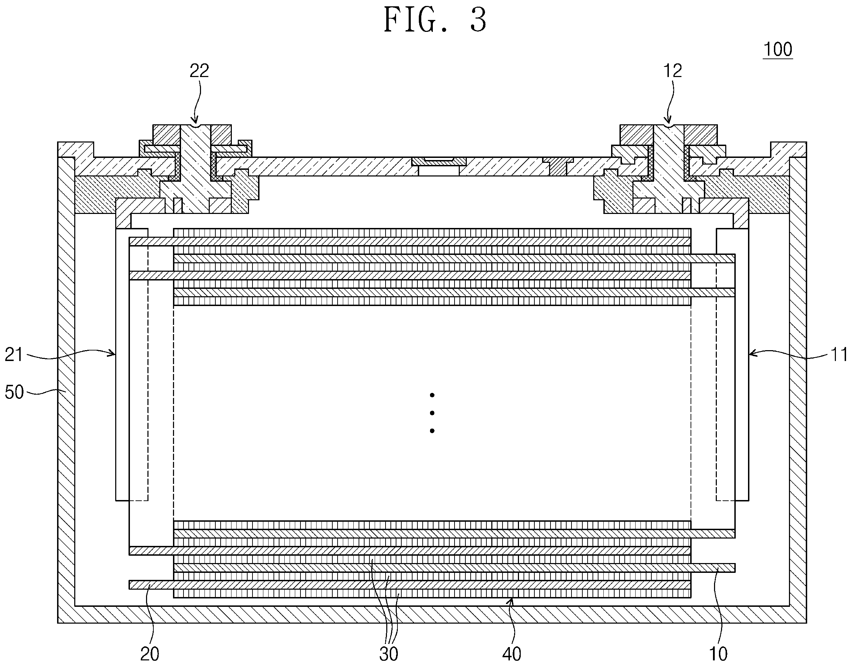

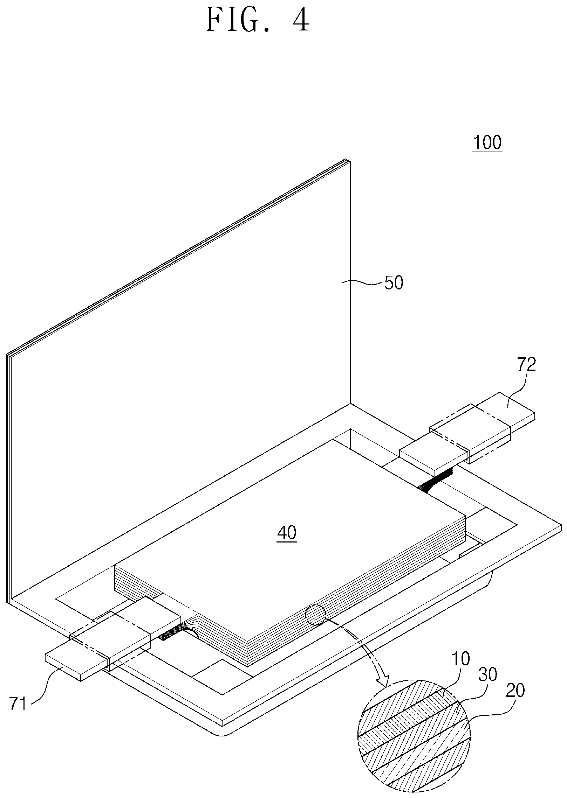

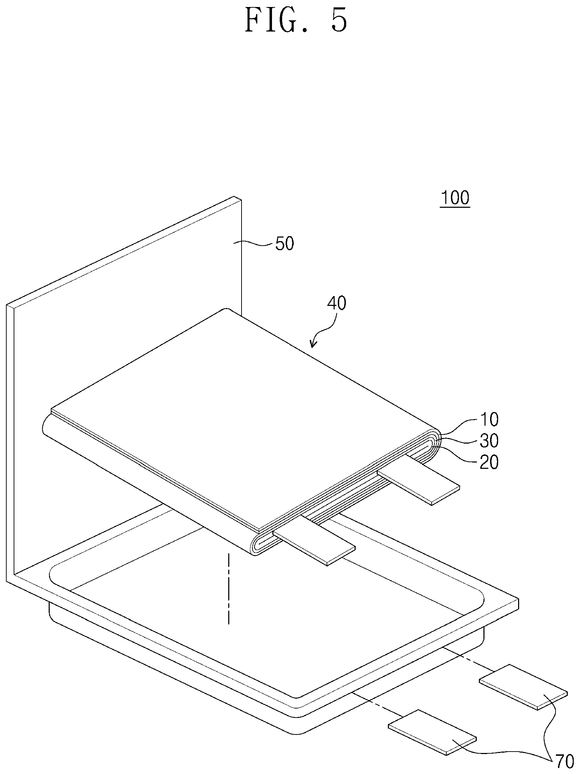

The rechargeable lithium battery may be classified into cylindrical, prismatic, pouch, or coin-type batteries, and the like depending on their shape. FIGS. 2 to 5 are schematic views illustrating a rechargeable lithium battery according to an embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

Hereinafter, an electrolyte solution for a rechargeable lithium battery according to embodiments of the present invention will be described in more detail.

The electrolyte solution for a rechargeable lithium battery, according to an embodiment, includes a non-aqueous organic solvent, a lithium salt, and an additive.

The additive according to an embodiment of the present invention is represented by Formula 1 below.

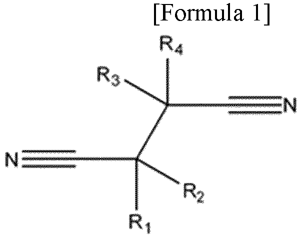

In Formula 1 above,
R₁ to R₄ may be each independently selected from the group consisting of a halogen atom, a C1 to C20 alkyl group, a C1 to C20 halogenated alkyl group, a C3 to C30 cycloalkyl group, a C6 to C30 aryl group, a hydroxy group, a C1 to C10 alkoxy group, a carboxylic acid group, an aldehyde group, an epoxy group, a cyano group, a nitro group, an amino group, and a sulfonic acid group.

For the additive according to an embodiment of the present invention, in Formula 1 above, R₁ to R₄ may be each independently any one selected from a methyl group, an ethyl group, a phenyl group, and a carboxyl group.

The additive may have a structure in which the same functional group is substituted for all R₁ to R₄, or a structure in which different functional groups are substituted. For example, Formula 1 above may be expressed by Formula 1-1 to Formula 1-3.

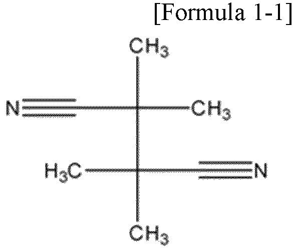

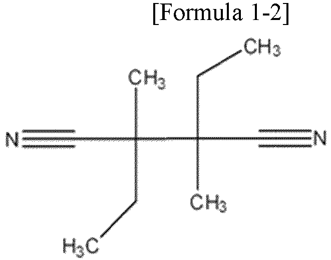

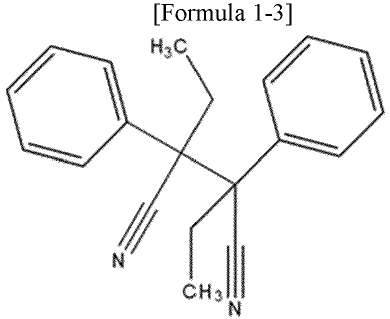

In Formula 1 above, at least one among R₁ to R₄ may be a substituent including fluorine (i.e. a C1 to C20 fluorinated alkyl group) or a fluorine atom.

The additive according to an embodiment of the present invention may have a structure in which the substituent is partially or entirely fluorinated. For example, Formula 1 above may represent a compound expressed by Formula 1A-1 to Formula 1A-4 below.

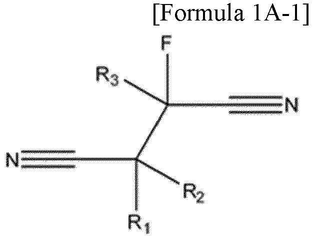

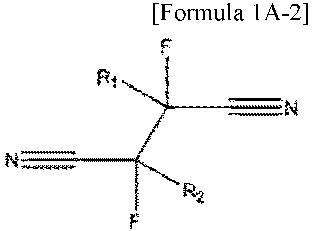

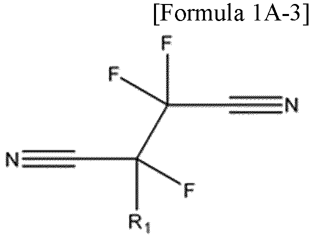

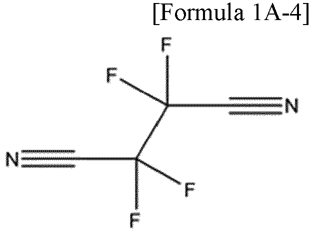

In Formula 1A-1 to Formula 1A-4 above,
R₁ to R₃ are each independently selected from the group consisting of a C1 to C20 alkyl group, a C1 to C20 halogenated alkyl group, a C3 to C30 cycloalkyl group, a C6 to C30 aryl group, a hydroxy group, a C1 to C10 alkoxy group, a carboxylic acid group, an aldehyde group, an epoxy group, a cyano group, a nitro group, an amino group, and a sulfonic acid group.

The additive according to an embodiment of the present invention may be a compound having a linear structure including a plurality of nitrile functional groups.

With strong negative charge characteristics, the nitrile functional group may absorb onto the surface of the positive electrode and form charge neutrality of a transition metal such as Ni⁴⁺ and Ni³⁺, thereby suppressing a side reaction where an electrolyte solution solvent decomposes.

The additive according to an embodiment of the present invention has a structure in which a carbon atom connecting two nitrile functional groups is substituted with a functional group effective in suppressing transition metal elution.

Since the additive represented by Formula 1 above has a structure in which R₁ to R₄ are all substituted with functional groups, a film may be formed on the surface of the positive electrode and decomposition of a positive electrode active material may thus be suppressed, thereby suppressing gas generation and transition metal elution caused by the decomposition of the positive electrode active material.

Accordingly, due to the structure in Formula 1 previously described, the additive according to an embodiment of the present invention may contribute more effectively to high-voltage stability and cycle lifespan characteristics of a lithium battery.

The additive may be included in an amount of 0.01 wt% to 10 wt% with respect to the total amount of the electrolyte solution. In particular, the amount of the additive may be 0.05 wt% to 3 wt% with respect to the total amount of the electrolyte solution. When the amount of the additive is below the above-mentioned range, a disadvantage in that films may not be formed sufficiently on a lithium-based positive electrode and negative electrode may be caused, and when the amount of the additive exceeds the above-mentioned range, a disadvantage in that the battery capacity and lifespan decrease, due to increase in resistance of the positive electrode and the negative electrode, may be caused.

Effect of the additive, represented by Formula 1 above, on improving high-temperature stability of the rechargeable lithium battery is more noticeable when used along with a high-nickel-based positive electrode active material and a negative electrode active material containing a silicon-carbon composite. In particular, a silicon particle may be used to increase a battery capacity, but may cause a side reaction with an electrolyte solution, so that resistance inside the battery may be increased. Since the above-mentioned additive suppresses the side reaction of the silicon particle with the electrolyte solution, the purpose of increasing the battery capacity may be maximized while the increase of the resistance inside the battery may be minimized.

The electrolyte solution may be prepared through a mixed process in which a lithium salt is dissolved in a non-aqueous organic solvent, and the additive is added thereto. A mixing process of the electrolyte solution, widely known in the field of preparing the electrolyte solution, may be appropriately selected and used by those skilled in the art.

The non-aqueous organic solvent may include at least one selected from the group consisting of ethyl methyl carbonate (EMC), ethylene carbonate (EC), dimethyl carbonate (DMC), propylene carbonate (PC), propylpropionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

For example, the non-aqueous organic solvent may be a mixed solvent of ethyl methyl carbonate (EMC), ethylene carbonate (EC), and dimethyl carbonate (DMC).

For example, the ethyl methyl carbonate (EMC) may be included in an amount of 5 vol% to 30 vol% with respect to the total amount of the non-aqueous organic solvent. The ethylene carbonate (EC) may be included in an amount of 10 vol% to 30 vol% with respect to the total amount of the non-aqueous organic solvent. The dimethyl carbonate (DMC) may be included in an amount of 50 vol% to 80 vol% with respect to the total amount of the non-aqueous organic solvent.

The lithium salt may include at least one selected from the group consisting of LiPF₆, LiClO₄, LiBF₄, lithium bis(fluorosulfonyl)imide (LiFSI), lithium bis(trifluoromethanesulfonyl)imide (LiTFSI), LiSO₃CF₃, LiBOB, LiFOB, LiDFBP, LiTFOP, LiPO₂F₂, LiSbF₆, LiAsF₆, LiAlO₂, LiAlCl₄, LiCl, LiI, LiN(SO₃C₂F₅)₂, Li(FSO₂)₂N, and LiC₄F₉SO₃. According to an embodiment, LiPF₆ may be used as the lithium salt.

The lithium salt may have a concentration of 0.1 M to 3.0 M. In particular, the concentration of the lithium salt may be 0.5 M or greater, and 1.0 M or greater. The concentration of the lithium salt may be 3.0 M or less, 2.5 M or less, and 2.0 M or less. According to an embodiment of the present invention, when the concentration of the lithium salt is 0.1 M to 2.0 M, conductivity and viscosity of the electrolyte solution may be appropriately maintained.

According to another embodiment of the present invention, a rechargeable lithium battery may include a positive electrode containing a positive electrode active material; a negative electrode containing a negative electrode active material; and an electrolyte solution, and the electrolyte solution may include a non-aqueous organic solvent; a lithium salt; and the additive represented by Formula 1 previously described.

The rechargeable lithium battery may be applied to automobiles, mobile phones, and/or various types of electric devices, and an embodiment of the present invention is not limited thereto.

The positive electrode active material may include a lithium composite oxide represented by Formula 2 below.

[Formula 2] LiₓM¹_{y}M²_{z}M³_{1-y-z}O₂₋ₐXₐ

In Formula 2 above,
0.5≤x≤1.8, 0≤a≤0.05, 0<y≤1, 0≤z≤1, and 0≤y+z≤1 are satisfied,
M¹, M² and M³ each independently include at least one element selected from a metal including Ni, Co, Mn, Al, B, Ba, Ca, Ce, Cr, Fe, Mo, Nb, Si, Sr, Mg, Ti, V, W, Zr, and La.

X includes at least one element selected from F, S, P, or Cl.

In an embodiment, in Formula 2 above, M¹ may be Ni, and 0.8≤y≤1 and 0≤z≤0.2 may be satisfied. Alternatively, in Formula 2 above, M¹ may be Ni, M² may be Co, and M³ may be Al. Alternatively, in Formula 2 above, M¹ may be Ni, M² may be Co, and M³ may be Mn.

In an embodiment, the positive electrode active material of the rechargeable lithium battery may include nickel, cobalt, and aluminum. Alternatively in an embodiment, the positive electrode active material of the rechargeable lithium battery may include nickel, cobalt, and manganese.

In the rechargeable lithium battery using the electrolyte solution according to an embodiment of the present invention, a carbon-based negative electrode active material, a Si-based negative electrode active material, a Sn-based negative electrode active material, or a combination thereof may be used as the negative electrode active material.

In an embodiment, the Si-based negative electrode active material may be a silicon-carbon composite. The Si-based negative electrode active material may include a core containing a silicon-based particle, and a coating layer containing amorphous carbon. The silicon-based particle may include at least one of a silicon particle, a Si-C composite, SiOₓ (0 < x ≤ 2), or a Si alloy.

When the positive electrode includes a high-nickel-based positive electrode active material and the negative electrode includes a silicon-carbon composite, effect on improving high-temperature stability of the rechargeable lithium battery may be maximized. The rechargeable lithium battery having the above combination may operate even at a high voltage of 4.2 V or greater.

Hereinafter, examples and comparative examples of the present invention are described. However, the following examples are provided for illustrative purpose only and are not to be construed to limit the scope of the present invention.

### Example and Comparative Example

### Example 1

### (1) Preparation of Electrolyte Solution

LiPF₆ of 1.5 M was dissolved in a non-aqueous organic solvent in which ethylene carbonate (EC), ethyl methyl carbonate (EMC), and dimethyl carbonate (DMC) were mixed in a volume ratio of 20:10:70, and 0.25 wt% of an additive was added to prepare an electrolyte solution.

A material represented by Formula 1-1 below was used as the additive.

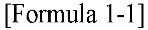

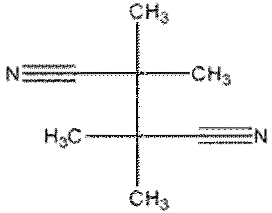

### (2) Preparation of Rechargeable Lithium Battery

97 wt% of NCA (LiNi_{0.91}Co_{0.08}Al_{0.01}O₂) as a positive electrode active material, 0.5 wt% of artificial graphite powder and 0.8 wt% of carbon black (ketj en black) as a conductive material, 0.2 wt% of acrylonitrile rubber, 1.5 wt% of polyvinylidene fluoride (PVdF) were mixed and added to N-methyl-2-pyrrolidone, and then agitated for about 30 minutes using a mechanical agitator to prepare a positive electrode active material slurry. A doctor blade was used to apply the slurry in a thickness of about 60 µm onto an aluminum current collector having a thickness of about 20 µm, the applied slurry was dried in a hot-air drier at about 100 °C for about 0.5 hours, then dried again for about 4 hours at about 120 °C in a vacuum condition, and roll-pressed to prepare a positive electrode.

98 wt% of a negative electrode active material in which graphite and a Si composite were mixed in a weight ratio of 95.8:4.2, 1 wt% of styrene-butadiene rubber (SBR), and 1 wt% of carboxymethyl cellulose (CMC) were mixed and added to distilled water, and agitated for about 60 minutes using a mechanical agitator to prepare a negative electrode active material slurry. A doctor blade was used to apply the slurry in a thickness of about 60 µm onto a copper current collector having a thickness of about 10 µm, the applied slurry was dried in a hot-air drier at about 100 °C for about 0.5 hours, then dried again for about 4 hours at about 120 °C in a vacuum condition, and roll-pressed to prepare a negative electrode.

The positive electrode, the negative electrode, and a polyethylene separator having a thickness of about 16 µm were assembled to prepare an electrode assembly, and the electrolyte solution was introduced to prepare a rechargeable lithium battery.

### Example 2

An electrolyte solution and a rechargeable lithium battery were prepared in the same manner as that of Example 1 except that 2.0 wt% of an additive was applied.

### Example 3

An electrolyte solution and a rechargeable lithium battery were prepared in the same manner as that of Example 1 except that 5.0 wt% of an additive was applied.

### Example 4

An electrolyte solution and a rechargeable lithium battery were prepared in the same manner as that of Example 1 except that an additive represented by Formula 1-2 below, instead of the additive represented by Formula 1-1 above, was used.

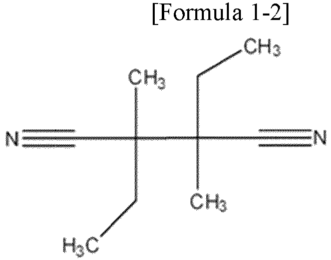

### Example 5

An electrolyte solution and a rechargeable lithium battery were prepared in the same manner as that of Example 1 except that an additive represented by Formula 1-3 below, instead of the additive represented by Formula 1-1 above, was used.

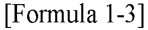

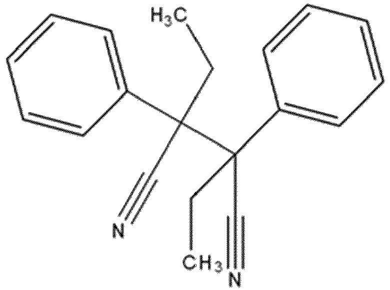

### Example 6

An electrolyte solution and a rechargeable lithium battery were prepared in the same manner as that of Example 1 except that an additive represented by Formula 1A-4 below, instead of the additive represented by Formula 1-1 above, was used.

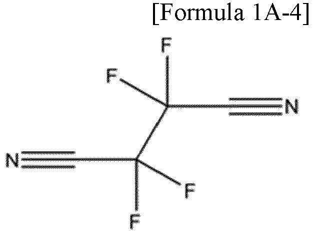

### Comparative Example 1

An electrolyte solution and a rechargeable lithium battery were prepared in the same manner as that of Example 1 except that the compound represented by Formula 1-1 above was not used in the preparation of the electrolyte solution.

### Comparative Example 2

An electrolyte solution and a rechargeable lithium battery were prepared in the same manner as that of Example 1 except that an additive represented by Formula 3-1 below, instead of the additive represented by Formula 1-1 above, was used.

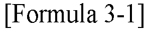

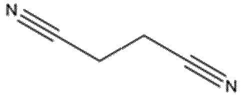

### Comparative Example 3

An electrolyte solution and a rechargeable lithium battery were prepared in the same manner as that of Example 1 except that an additive represented by Formula 3-2 below, instead of the additive represented by Formula 1-1 above, was used.

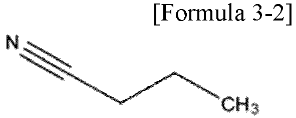

### Comparative Example 4

An electrolyte solution and a rechargeable lithium battery were prepared in the same manner as that of Example 1 except that an additive represented by Formula 3-3 below, instead of the additive represented by Formula 1-1 above, was used.

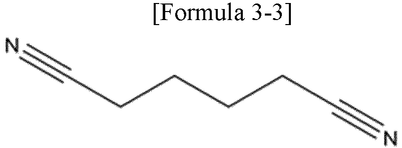

### Comparative Example 5

An electrolyte solution and a rechargeable lithium battery were prepared in the same manner as that of Example 1 except that an additive represented by Formula 3-4 below, instead of the additive represented by Formula 1-1 above, was used.

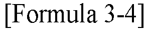

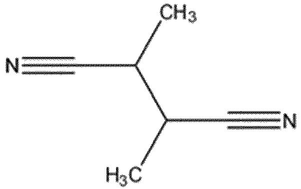

### Evaluation Example

A rechargeable lithium battery was evaluated in the following methods.

### Evaluation 1: ICP-OES Analysis (Evaluation on Transition Metal Elution)

A formation process and charging and discharging were performed on the rechargeable lithium batteries according to examples and comparative examples, and the rechargeable lithium batteries were stored at about 60 °C for 1 day, and then an elution amount of metal ions (Ni) was measured in the following method. The charging and discharging were performed at about 45 °C under the condition of charge with 1.0 C (CC/CV, 4.25 V cut-off) / discharge with 1.0 C (CC, 2.5 V cut-off).

The rechargeable lithium battery was disassembled, and a positive electrode plate was separated. Thereafter, the separated positive electrode plate was placed in a 10 ml Teflon container with an electrolyte solution and the container was sealed, and then ICP-OES analysis was conducted to measure an amount of Ni, and the results were listed in Table 1 below.

### Evaluation 2: XRD results of Positive Electrode

A formation process and charging and discharging were performed on the rechargeable lithium batteries prepared according to examples and comparative examples, and the rechargeable lithium batteries were stored at a high temperature of about 60 °C for 30 days, and then disassembled to separate a positive electrode plate. The charging and discharging were performed at about 45 °C under the condition of charge with 1.0 C (CC/CV, 4.25 V cut-off) / discharge with 1.0 C (CC, 2.5 V cut-off).

Thereafter, an X-ray diffraction (XRD) analysis was conducted on the separated positive electrode plate to measure a peak ratio of (I₀₀₃)/(I₁₀₄), and the results were listed in Table 1 below.

### Evaluation 3: Evaluation on High-Temperature Storage Characteristics

A formation process and charging and discharging were performed on the rechargeable lithium batteries according to examples and comparative examples, and the rechargeable lithium batteries were stored at about 60 °C for 1 day/30 days, then discharge capacities were measured and capacity retention rates were calculated, and the results were listed in Table 1 below.

The charging and discharging were performed at about 45 °C under the condition of charge with 1.0 C (CC/CV, 4.25 V cut-off) / discharge with 1.0 C (CC, 2.5 V cut-off).

The capacity retention rate was calculated according to Equation 1 and Equation 2 below. Discharge capacity retention rate (%) immediately after high-temperature storage = (discharge capacity after high-temperature storage for 1 day/initial discharge capacity) × 100 Discharge capacity retention rate (%) after high-temperature lifespan = (discharge capacity after high-temperature lifespan of 30 days/initial discharge capacity) × 100

**[Table 1]**

| | Elution amount of transition metal (Co) (ppm) | Positive electrode XRD result I_{[003]} / I_{[104]} | Discharge capacity retention rate immediately after high-temperature storage (%) | Discharge capacity retention rate after high-temperature lifespan (%) |
|---|---|---|---|---|
| Comparative Example 1 | 12.3 | 0.613 | 64.4 | 42.1 |
| Comparative Example 2 | 4.9 | 0.647 | 76.1 | 46.4 |
| Comparative Example 3 | 2.7 | 0.718 | 78.3 | 61.1 |
| Comparative Example 4 | 2.3 | 0.724 | 76.2 | 63.2 |
| Comparative Example 5 | 4.8 | 0.668 | 76.0 | 46.3 |
| Example 1 | 0.3 | 0.724 | 76.2 | 63.2 |
| Example 2 | 0.3 | 0.715 | 76.0 | 63.0 |
| Example 3 | 0.4 | 0.698 | 75.5 | 62.7 |
| Example 4 | 0.2 | 0.706 | 75.8 | 62.9 |
| Example 5 | 1.0 | 0.686 | 74.1 | 61.5 |
| Example 6 | 0.8 | 0.711 | 75.9 | 63.1 |

### Comprehensive Evaluation

Referring to Table 1 above, it can be seen that high-temperature (about 60 °C) storage characteristics were improved when using the electrolyte solutions in which the additive according to an embodiment of the present invention was added (Examples 1 to 6), compared with when using the electrolyte solution in which the additive according to an embodiment of the present invention was not added (Comparative Example 1).

Furthermore, it can be seen that the nitrile-based additive in which R₁ to R₄ functional groups in Formula 1, previously described, were entirely substituted (Example 1) exhibited more excellent high-temperature (about 60 °C) storage characteristics than the nitrile-based additive in which R₁ to R₄ functional groups were only partially substituted (Comparative Example 5).

In addition, referring to Table 1, it can be seen that the rechargeable lithium batteries prepared according to examples have an elution amount of Ni in an electrode plate significantly lower than the rechargeable lithium batteries prepared according to comparative examples. Therefore, the rechargeable lithium batteries according to examples may have the effect on suppressing positive electrode deterioration by suppressing transition metal elution during high-temperature storage.

In addition, referring to the peak ratio of (I₀₀₃)/(I₁₀₄) in Table 1, it can be seen that in the rechargeable lithium batteries prepared according to examples, compared with those prepared according to comparative examples, structural deterioration was suppressed through strong charge neutrality on the surface of the positive electrode and the suppression of transition metal elution.

An electrolyte solution for a rechargeable lithium battery according to an embodiment may suppress transition metal elution in a positive electrode and form a stable positive electrode film, thereby having the effect on improving high-temperature lifespan characteristics and stability.

Although the embodiments of the present invention have been described with reference to the accompanying drawings, it is understood that the present invention should not be limited to these embodiments but various changes and modifications can be made within the scope of the claims, the detailed description of the present invention, and the accompanying drawings, and this also falls within the scope of the present invention.

## Claims

1. An electrolyte solution for a rechargeable lithium battery (100), the electrolyte comprising:
a non-aqueous organic solvent;
a lithium salt; and
an additive represented by Formula 1 below: 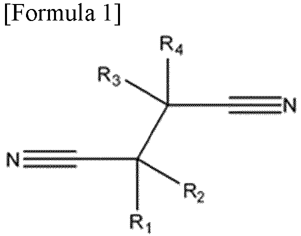 wherein, in Formula 1 above,
R₁ to R₄ are each independently selected from the group consisting of a halogen atom,
a C1 to C20 alkyl group, a C1 to C20 halogenated alkyl group, a C3 to C30 cycloalkyl group,
a C6 to C30 aryl group, a hydroxy group, a C1 to C10 alkoxy group, a carboxylic acid group,
an aldehyde group, an epoxy group, a cyano group, a nitro group, an amino group, and a sulfonic acid group.

2. The electrolyte solution of claim 1, wherein the additive is represented by at least one of Formula 1-1 to Formula 1-3 below:

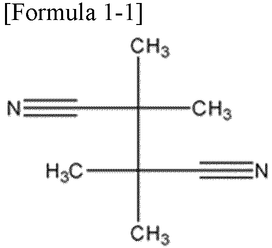

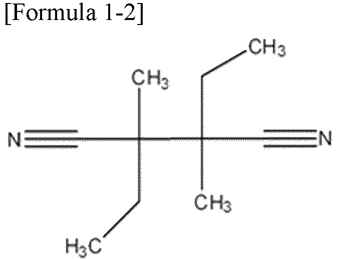

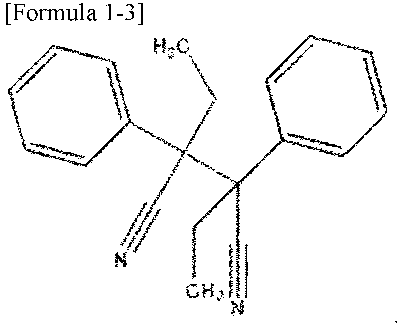

3. The electrolyte solution of claim 1, wherein, in Formula 1 above, at least one among R₁ to R₄ is a C1 to C20 fluorinated alkyl group or a fluorine atom.

4. The electrolyte solution of claim 1, wherein the additive is represented by Formula 1A-1 to Formula 1A-4 below: 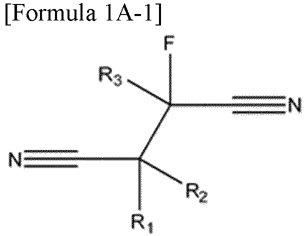 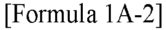 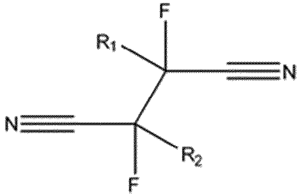 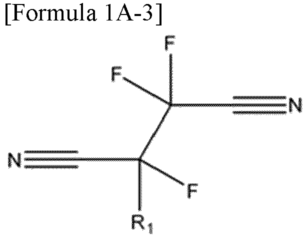 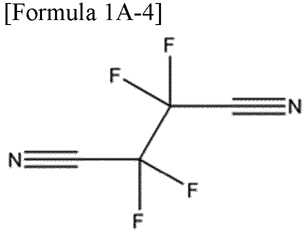 wherein, in Formula 1A-1 to Formula 1A-4 above,
R₁ to R₃ are each independently selected from the group consisting of a C2 to C20 alkyl group, a C1 to C20 alkyl group, a C1 to C20 halogenated alkyl group, a C3 to C30 cycloalkyl group, a C6 to C30 aryl group, a hydroxy group, a C1 to C10 alkoxy group, a carboxylic acid group, an aldehyde group, an epoxy group, a cyano group, a nitro group, an amino group, and a sulfonic acid group.

5. The electrolyte solution of any one of the preceding claims, wherein the additive is included at 0.01 wt% to 10 wt% on the basis of a total weight of the electrolyte solution.

6. The electrolyte solution of any one of the preceding claims, wherein the non-aqueous organic solvent comprises at least one selected from the group consisting of ethyl methyl carbonate (EMC), ethylene carbonate (EC), dimethyl carbonate (DMC), propylene carbonate (PC), propylpropionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

7. The electrolyte solution of any one of the preceding claims, wherein the lithium salt is at least one selected from the group consisting of LiPF₆, LiClO₄, LiBF₄, lithium bis(fluorosulfonyl)imide (LiFSI), lithium bis(trifluoromethanesulfonyl)imide (LiTFSI), LiSO₃CF₃, LiBOB, LiFOB, LiDFBP, LiTFOP, LiPO₂F₂, LiSbF₆, LiAsF₆, LiAlO₂, LiAlCl₄, LiCl, LiI, LiN(SO₃C₂F₅)₂, Li(FSO₂)₂N, and LiC₄F₉SO₃.

8. The electrolyte solution of any one of the preceding claims, wherein the lithium salt has a concentration of 0.1 M to 3.0 M.

9. A rechargeable lithium battery (100) comprising:
a positive electrode (10) including a positive electrode active material;
a negative electrode (20) including a negative electrode active material; and
the electrolyte solution of any one of the preceding claims.

10. The rechargeable lithium battery (100) of claim 9, wherein the positive electrode active material comprises a lithium composite oxide represented by Formula 2 below:
[Formula 2] LiₓM¹_{y}M²_{z}M³_{1-y-z}O₂₋ₐXₐ
where, in Formula 2 above, 0.5≤x≤1.8, 0≤a≤0.05, 0<y≤1, 0≤z≤1, and 0≤y+z≤1,
M¹, M², and M³ each independently includes at least one element selected from a metal including Ni, Co, Mn, Al, B, Ba, Ca, Ce, Cr, Fe, Mo, Nb, Si, Sr, Mg, Ti, V, W, Zr, and La, and
X includes at least one element selected from F, S, P, or Cl.

11. The rechargeable lithium battery (100) of claim 10, wherein in Formula 2 above, M¹ is Ni, 0.8≤y≤1, and 0≤z≤0.2.

12. The rechargeable lithium battery (100) of any one of claims 9 to 11, wherein the negative electrode active material comprises a carbon-based negative electrode active material, a Si-based negative electrode active material, a Sn-based negative electrode active material, or a combination thereof.

13. The rechargeable lithium battery (100) of claim 12, wherein the Si-based negative electrode active material is a silicon-carbon composite.

14. The rechargeable lithium battery (100) of any one of claims 9 to 13, wherein the rechargeable lithium battery (100) operates even at a high voltage of 4.2 V or greater.
